# EUROPÄISCHE PATENTANMELDUNG

(11) **EP 1 710 739 A1**
(43) Veröffentlichungstag der Anmeldung: **11.10.2006**
(21) Anmeldenummer: 06004322.1
(22) Anmeldetag: 03.03.2006
(51) Int. Cl.: G06Q 10/00

(54) **Verfahren zur Aktualisierung einer Datenbank.**

(30) Priorität: 07.04.2005 DE 102005016815
(71) Anmelder: Deutsche Telekom AG, 53113 Bonn (DE)
(72) Erfinder: Trinkel, Marian, Dipl.-Ing., 52372 Kreuzau (DE); Müller, Christel, Dipl.-Ing., 15732 Schulzendorf (DE); Schönebeck, Heiko Armin, Dipl.-Inf., 15732 Schulzendorf (DE); Weinmann, Carsten, 45259 Essen (DE); Drees, Dietmar, 58730 Fröndenberg (DE)

(57) **Zusammenfassung**

Die Erfindung betrifft ein Verfahren zum Betrieb, insbesondere zum Erstellen einer Datenbank mit personenbezogenen Informationen, insbesondere einer Adressdatenbank und/oder Termindatenbank, bei dem der Inhalt einer über ein Telekommunikationsnetz versendeten Nachricht, insbesondere Sprach-, Text-, Bildnachricht, Bewegtbildnachricht oder Nachricht in einer Webseite untersucht wird auf das Vorhandensein personenbezogener Informationen und dass nach dem Auffinden personenbezogener Informationen diese aus einer Nachricht extrahiert, wenigstens einer Person zugeordnet und in der Datenbank gespeichert werden.

## Beschreibung

Die Erfindung betrifft ein Verfahren zum Betrieb, insbesondere zum Erstellen und/oder Aktualisieren einer Datenbank mit personenbezogenen Informationen, wie z.B. einer Adressdatenbank und/oder Termindatenbank.

Datenbanken mit personenbezogenen Informationen gewinnen sowohl im privaten als auch im geschäftlichen Bereich immer mehr an Bedeutung. So ist es beispielsweise bekannt, dass Firmen nach Rückgriff auf Adressdatenbanken an die in diesen Datenbanken gespeicherten Personen ihre Werbung versenden, um auf diesem Wege neue Kunden zu gewinnen. Aufgrund der wirtschaftlichen Bedeutung derartiger Datenbanken ist es daher mittlerweile auch üblich geworden mit den Inhalten solcher Datenbanken einen Handel zu betreiben und somit die gespeicherten personenbezogenen Informationen auch anderen Unternehmen gegen Entgelt zur Verfügung zu stellen. Hierbei bemisst sich der Wert einer solchen Datenbank bzw. deren Inhalte maßgeblich am Umfang der gespeicherten personenbezogenen Informationen und an deren Aktualität.

Bekannt ist es, dass heutzutage derartige Datenbanken bzw. deren Inhalte im Wesentlichen manuell gesammelt werden. Hierfür werden beispielsweise potentielle Kunden aufgefordert, z.B. im Rahmen von Gewinnspielen ihre Adressen und etwaige andere persönliche Informationen bekannt zu geben. Ebenso kann auf Informationen zurückgegriffen werden, die bei typischen Versandhäusern vorliegen, sofern die dort gespeicherten Kunden nicht ausdrücklich die Weitergabe Ihrer Daten untersagt haben.

Neben den vorbeschriebenen Datenbanken mit im Wesentlichen Informationen über potentielle Kunden oder Werbungsempfänger ist ein weiteres typisches Anwendungsgebiet von Datenbanken mit personenbezogenen Informationen z.B. eine Adress- und/oder Termindatenbank. Viele Personen führen mittlerweile für den geschäftlichen Bereich und zum Teil auch im privaten Umfeld entsprechende Datenbanken der vorgenannten Art für die von diesen Personen gepflegten Kontakte, wie beispielsweise über Geschäftspartner, Freunde, Ärzte, Anwälte, öffentliche Adressen etc.

Auch bei den zuletzt genannten Datenbanken stellt sich das Problem der Aktualität, beispielsweise wenn Personen, zu denen Informationen in einer solchen Datenbank gespeichert sind, umgezogen sind, sich somit beispielsweise die Adresse geändert hat oder die Person aus anderen Gründen zwischenzeitlich geänderte Kontaktdaten aufweisen, wie beispielsweise geänderte Telefonnummern, e-mail-Adressen, Postadressen oder ähnliches.

Aufgabe der Erfindung ist es, ein einfaches Verfahren bereit zu stellen, mit dem z.B. derartige vorgenannte Datenbanken betrieben, insbesondere erstellt und gepflegt werden können.

Diese Aufgabe wird erfindungsgemäß dadurch gelöst, dass der Inhalt einer über ein Telekommunikationsnetz versendeten Nachricht, insbesondere Sprach-, Text-, Bildnachricht, Bewegtbildnachricht oder Nachricht in einer Webseite untersucht wird auf das Vorhandensein personenbezogener Informationen und dass nach dem Auffinden personenbezogener Informationen diese aus einer Nachricht extrahiert, wenigstens einer Person zugeordnet und in der Datenbank gespeichert werden.

Dieser vorgenannten Erfindung liegt es als wesentlich zugrunde, dass Telekommunikationsnetzwerke heutzutage vielfach dazu verwendet werden, um Nachrichten jeglicher Art zu versenden, um personenbezogene Informationen zu übermitteln. Hierbei handelt es sich bei solchen personenbezogenen Informationen beispielsweise um Namensinformationen, Adressinformationen sowie Erreichbarkeitsinformationen. Als Telekommunikationsnetzwerke kommen z.B. das Telefon-Festnetz, das Mobilfunknetz, das Internet oder jegliches anderes Netz in Frage, über welches ein Nachrichtenaustausch möglich ist.

So wird beispielsweise sehr gerne das Telefonnetz verwendet, um einem Gesprächspartner, insbesondere auch bei dessen Abwesenheit über eine eingeschaltete Anrufbeantworter-Mailbox mitzuteilen, dass sich eine persönliche Information des Anrufers oder auch zu einer dritten Person, zu der in der Nachricht Bezug genommen wird, geändert hat, wie beispielsweise die Adresse, eine Telefonnummer, eine e-mail-Adresse oder andere Erreichbarkeitsinformationen. Das Telefonnetz kann auch durch ein Netz für internetbasierte Telefonie (IP-Telefonie) gegeben sein. Hierbei können derartige Erreichbarkeitsinformationen gegebenenfalls auch nur zeitlich befristete Gültigkeit aufweisen können, z.B. bei einer Urlaubsabwesenheit, einer Geschäftsreise, Terminen oder ähnlichem.

Im Kerngedanken macht sich die Erfindung zunutze, dass in Nachrichten, die über Telekommunikationsnetze versendet werden, eine Vielzahl von personenbezogenen Informationen vorliegen, die ausgewertet und weiterhin ausgenutzt werden können. Wird nun in einer Nachricht eine personenbezogene Information, wie z.B. eine Adressänderung, aufgefunden, so kann diese Information aus der Nachricht extrahiert werden, wobei weiterhin ermittelt werden muss, welcher Person diese aufgefundene Information zuzuordnen ist, um sodann einen Datenbankeintrag für diese Person mit der aufgefundenen Information zu generieren oder aber auch gegebenenfalls einen bestehenden Datenbankeintrag zu ändern.

Es besteht so die Möglichkeit, innerhalb kurzer Zeit z.B. bei ständiger Abfrage und Überprüfung von Nachrichten in Telekommunikationsnetzen eine Datenbank großen Umfangs aufzubauen und zu warten bzw. aktuell zu halten.

Gemäß der Erfindung kann es vorgesehen sein, Nachrichten jeglicher Art zu untersuchen und auszuwerten, wobei hier beispielsweise Sprach-, Text- und Bildnachrichten (wie z.B. Standbilder, Bewegtbilder, z.B. Videostream), Webseiten zum Einsatz kommen können. Vor einer Untersuchung einer Nachricht auf das Vorhandensein personenbezogener Informationen kann z.B. eine derartige Nachricht zunächst gewandelt werden müssen in ein auswertbares bzw. untersuchbares Format, sofern die Nachricht nicht bereits in einem solchen Format vorliegt, wie beispielsweise bei e-mails oder auch SMS-Nachrichten im Mobilfunknetz. Bei einem derartigen Format kann es sich z.B. um ein Textformat, beispielsweise mit ASCII-Zeichen handeln, da Textinformationen im Wesentlichen sehr einfach zu untersuchen und auszuwerten sind.

Bei Nachrichten, die nicht schon ursprünglich in einem solchen Format vorliegen, kann erfindungsgemäß zunächst eine Wandlung vollzogen werden. Beispielsweise können Sprachnachrichten, insbesondere solche, die auf Sprachmailboxen hinterlassen werden, über eine vorherige Sprachanalyse in ein auswertbares Format, z.B. in Text gewandelt werden. Derartige Wandlungen können beispielsweise auch bei Faxnachrichten vorgesehen sein oder bei sonstigen jeglichen Nachrichten, die nicht ursprünglich im auswertbaren Format gegeben sind.

Grundsätzlich kann es vorgesehen sein, eine Nachricht, die auf ihrem Weg vom Absender zum Empfänger ein Telekommunikationsnetz durchläuft, auf das Vorhandensein personenbezogener Informationen zu untersuchen. Hierbei spielt es gemäß der Erfindung keine Rolle, zu welchem Zeitpunkt oder an welcher Station beim Durchlaufen eines Telekommunikationsnetzes eine derartige Untersuchung stattfindet.

In einer bevorzugten Ausführung ist es jedoch vorgesehen, dass Nachrichten untersucht werden, die innerhalb eines Telekommunikationsnetzes, insbesondere temporär und/oder innerhalb eines empfangenden Telekommunikationsgerätes, insbesondere eines Telekommunikationsendgerätes, gespeichert werden. Durch eine Speicherung, gegebenenfalls auch nur temporär, kann erreicht werden, dass zeitlich unkritisch eine Untersuchung von vorhandenen gespeicherten Nachrichten durchgeführt werden kann, d.h. eine Nachricht, die Telekommunikationsnetz durchläuft muss nicht zwangsweise in dem Augenblick ihres Transportes durch das Telekommunikationsnetz analysiert werden, was gegebenenfalls bei einem hohen Nachrichtenaufkommen zu einer sehr starken Belastung des Netzes bzw. jeglicher Infrastrukturen führen kann, die für eine derartige Untersuchung vorgesehen sind, wie beispielsweise Rechnersysteme.

Die Untersuchung von gegebenenfalls auch nur temporär gespeicherten Nachrichten hat den Vorteil, dass die aufzuwendende Arbeitsbelastung für die Untersuchung von Nachrichten zeitlich verteilt erfolgen kann.

Allgemein besteht auch die Möglichkeit, dass nicht grundsätzlich jede Nachricht untersucht wird, sondern z.B. nur die Nachrichten in speziellen Speichern oder Speicherbereichen innerhalb des Telekommunikationsnetzes oder von Telekommunikationsgeräten.

Es kann beispielsweise auch aus Datenschutzgründen vorgesehen sein, dass nur diejenigen Nachrichten untersucht werden, zu denen die entsprechenden Benutzer, also beispielsweise die Absender derartiger Nachrichten, eine Freigabe für eine solche Untersuchung vorgesehen haben. Gegebenenfalls kann es auch vorgesehen sein, dass eine Freigabe gegeben sein muss von den entsprechenden Empfängern der Nachrichten oder auch von beiden, d.h. sowohl von der empfangenden als auch von der sendenden Partei.

Gemäß der Erfindung kann es beispielsweise vorgesehen sein, diejenigen Nachrichten zu untersuchen, die z.B. temporär insbesondere innerhalb einer Vermittlungsstelle gespeichert werden. Hierbei wird unter einer Vermittlungsstelle nicht zwingend die Vermittlungsstelle eines Telefonnetzes verstanden, sondern grundsätzlich jegliche Vermittlungsstelle innerhalb eines Telekommunikationsnetzes, die dafür Sorge trägt, dass eine Nachricht von einem Absender zu einem bestimmten ausgewählten Empfänger weiter geleitet wird.

So kann ein Zwischenspeichern von Nachrichten gegebenenfalls auch innerhalb von mehreren Vermittlungsstellen eines oder mehrerer Telekommunikationsnetze auf ihrem Weg vom Sender zum Empfänger vorgesehen sein, wie beispielsweise bei der Versendung von Faxnachrichten oder e-mail-Nachrichten.

Ebenso besteht die Möglichkeit, Nachrichten zu untersuchen und entsprechende Informationen zu extrahieren, sobald die Nachrichten innerhalb eines empfangenden Telekommunikationsgerätes, insbesondere eines Telekommunikationsendgerätes gespeichert werden, wie beispielsweise in einer Mailbox bzw. einem Anrufbeantworter. Ein derartiger Speicher, in dem die Nachrichten auflaufen und gespeichert werden können, kann beispielsweise schon innerhalb eines Telekommunikationsnetzes vorgesehen sein oder gegebenenfalls auch beim Kunden, der ein Telekommunikationsendgerät betreibt.

Wesentlich für das erfindungsgemäße Verfahren ist es weiterhin, dass die aus einer Nachricht gewonnenen personenbezogenen Informationen einer Person zugeordnet werden kann, um so sicherzustellen, dass ein auf diese Person bezogener Datenbankeintrag erstellt oder gegebenenfalls geändert werden kann. Hierbei erweist es sich als vorteilhaft, wenn die Zuordnung der personenbezogenen Informationen zu einer Person anhand der Nachricht selbst erfolgt und/oder anhand von Daten, die während einer Telekommunikation mit einer solchen Nachricht in Verbindung stehen, wie beispielsweise einem Kommunikationsdatensatz.

So wird es als besonders vorteilhaft empfunden, wenn eine Zuordnung von personenbezogenen Informationen erfolgt z.B. anhand einer Inhaltsanalyse der Nachricht und/oder einer Kennung des die Nachricht absendenden/empfangenden Telekommunikationsgerätes, wie beispielsweise anhand einer CLI - Call Line Identity, HLR - Home Location Register, IMEI, SIM und/oder anhand einer Kennung der die Nachricht absendenden/empfangenden Person, wie z.B. einer PIN, PAN, SIM oder gegebenenfalls auch biometrischer Daten und/oder anhand von Schlüsseldaten, insbesondere Schlüsselwörtern oder -bilder, innerhalb einer Nachricht und/oder weiterer Datenbankinformationen einer erfindungsgemäß aufbereiteten Datenbank oder aber auch einer jeglichen anderen Datenbank oder anhand von Linkadressen oder Kommunikationsadressen, insbesondere die innerhalb einer Nachricht auftauchen.

Wesentlich für die vorgenannten erfindungsgemäßen Ansätze ist es, dass eine Nachricht, die personenbezogene Informationen aufweist, üblicherweise einhergeht mit weiteren Angaben zu einer Person, auf die sich die vorgenannten Informationen beziehen, die z.B. aus einer Inhaltsanalyse der Nachricht gewonnen werden kann, z.B. mittels einem Wissensmanagements. So kann es beispielsweise vorgesehen sein, dass innerhalb einer Nachricht Namen genannt werden, wie beispielsweise der Name der die Nachricht absendenden Person oder es wird beispielsweise auch die Empfängerperson direkt namentlich angesprochen. Gegebenenfalls kann es auch sein, dass von einem Absender gegenüber einem Empfänger von einer dritten Person namentlich gesprochen wird.

Insbesondere die Tatsache, dass einer Nachricht innerhalb eines Telekommunikationsnetzes Telekommunikationskennungen zugeordnet sind, wie beispielsweise die Kennung des absendenden Telekommunikationsanschlusses bzw. des darant angeschlossenen Gerätes als auch beispielsweise die Kennung eines empfangenden Telekommunikationsanschlusses/-gerätes kann maßgeblich zu einer Identifizierung und Zuordnung einer Person, auf die sich die übermittelten Informationen beziehen, beitragen.

Weitere Informationen können aus den Gerätekennungen oder auch z.B. aus den SIM-Karten von Mobilfunktelefonen gewonnen werden, da diese SIM-Karten üblicherweise vertragsgemäß einer bestimmten Person zugeordnet sind.

Gemäß der Erfindung und einer der vorgenannten alternativ oder kumulativ einzusetzenden Möglichkeiten kann es auch vorgesehen sein, neben einer Nachricht die damit ggfs. einhergehenden biometrischen Daten zu untersuchen und auszuwerten, um eine Zuordnung zu einer Person zu ermöglichen. Derartige biometrische Daten können beispielsweise bei einer Sprachinformation die übertragenen Sprachdaten darstellen.

Insbesondere mit Schlüsselinformationen, wie beispielsweise Schlüsselwörtern, kann eine vereinfachte Zuordnung erreicht oder zumindest erleichtert werden. Solche Schlüsselinformationen oder Schlüsselwörter können z.B. Namensnennungen oder die Nennung von Telefonnummern oder typischen Kennungen in Telekommunikationsnetzen, wie beispielsweise auch e-mail-Adressen, Internetseiten etc. darstellen.

In Verbindung mit weiteren Datenbankinformationen einer erfindungsgemäßen betriebenen oder anderer Datenbanken kann weiterhin versucht werden, eine Personenzuordnung zu ermöglichen oder zu erleichtern, beispielsweise dadurch, dass in anderen Datenbanken oder in der erfindungsgemäßen Datenbank nachgesehen wird, ob zu den in der speziell untersuchten Nachricht aufgefundene Informationen passende weitere Informationen aufgefunden werden, die eine Korrelation der konkret in der untersuchten Nachricht gefundenen Information mit den anderen Informationen anderer oder derselben Datenbank erlauben.

Gemäß der Erfindung kann es vorgesehen sein, dass eine Datenbank, die mittels des erfindungsgemäßen Verfahrens erstellt oder gewartet bzw. gepflegt wird, wenigstens einem Telekommunikationsteilnehmer und/oder einer Telekommunikationskennung zugeordnet ist, insbesondere einer von diesem bzw. unter der Telekommunikationskennung betriebenen Speichereinheit, wie beispielsweise einer Mailbox.

Hierdurch kann erfindungsgemäß erreicht werden, dass beispielsweise der Benutzer eines Telekommunikationsnetzes, der innerhalb des Netzes unter einer ihm zugewiesenen Telekommunikationskennung ein Telekommunikationsgerät betreibt, weiterhin eine Datenbank betreibt, in der die für diesen Benutzer wichtigen Kontaktdaten anderer Personen gespeichert sind. Bei einer solchen Datenbank kann es sich z.B. um eine typische Adress- oder auch Termindatenbank handeln.

Es kann demnach entsprechend der Erfindung beispielsweise vorgesehen sein, dass Nachrichten, die durch das Telekommunikationsnetz versendet, gegebenenfalls temporär oder auf Dauer in diesem gespeichert werden, ausgewertet werden, um die einem Telekommunikationsteilnehmer speziell zugeordnete Datenbank zu erstellen, zu ergänzen oder zu warten, d.h. aktuell zu halten.

Beispielsweise kann es hierbei vorgesehen sein, dass für eine Erstellung oder Aktualisierung dieser entsprechenden Datenbank nur diejenigen Nachrichten zum Einsatz kommen, die an diese spezielle Benutzerperson bzw. an dessen Telekommunikationskennung oder einer dahinter betriebenen Mailbox gerichtet sind. So kann gewährleistet werden, dass jegliche Nachricht, die diesen Telekommunikationsteilnehmer über ein Telekommunikationsnetz erreicht und die Informationen personenbezogener Art zu einer seiner Kontaktpersonen gemäß der Adress- oder Termindatenbank aufweist, automatisch ausgewertet wird, um sodann die dieser Person zugeordnete Datenbank zu erstellen, zu ergänzen oder zu berichtigen.

So kann beispielsweise die Adress- und Kontaktdatenbank eines Telekommunikationsteilnehmers automatisch berichtigt werden, sofern bei dem Inhaber dieser Datenbank die Nachricht einläuft, dass eine der gespeicherten Kontaktpersonen eine geänderte oder neue Information hat, z.B. mittlerweile eine andere Telefonnummer hat. Diese Information kann nach Auswertung unmittelbar in die Datenbank übernommen werden, so dass der Inhaber dieser Datenbank automatisch die neue Kontaktinformation erhält, ohne dass er selbst die empfangene Nachricht auswerten und die Information in die Datenbank übertragen muss.

Telekommunikationsteilnehmer sind alle Teilnehmer, die direkter oder indirekter Art an einer Telekommunikation beteiligt sind.

In einer Alternative oder auch kumulativ kann die Möglichkeit gegeben sein, dass eine Datenbank der erfindungsgemäßen Art nicht nur speziell einem Telekommunikationsteilnehmer bzw. einer Telekommunikationskennung zugeordnet ist, sondern z.B. auch global innerhalb eines Telekommunikationsnetzes zur Verfügung steht. Bei einer solchen Datenbank kann es sich z.B. um eine allgemein zugängliche Auskunftsdatenbank handeln, wie beispielsweise eine Telefon- oder eine Branchendatenbank.

Es kann so gemäß der Erfindung vorgesehen sein, dass Nachrichten, die personenbezogene Informationen zu einer in einer solchen Datenbank gespeicherten Person umfassen, automatisch untersucht und verwendet werden, um den Datenbankeintrag dieser Person zu ändern, zu überprüfen oder zu aktualisieren. Hierfür kann z.B. das Telekomunikationsnetz systematisch gescannt werden.

Gemäß der Erfindung kann es auch vorgesehen sein, dass bei Betrieb mehrerer Datenbanken, z.B. die verschiedenen Telekommunikationsteilnehmern zugeordnet sind oder auch global oder einem größeren Kreis zur Verfügung stehen, diejenigen Informationen, die zu einer bestimmten Bezugsperson aus einer Nachricht ermittelt werden, automatisch auf sämtliche Datenbanken verteilt werden, welche Informationen zu dieser Bezugsperson aufweisen. Es kann dementsprechend eine automatische Umverteilung der gewonnenen Information stattfinden, wobei beispielsweise zunächst überprüft wird, ob eine Datenbank Informationen zu der Bezugsperson aufweist und, sofern dies der Fall ist, dass sodann diese in der Datenbank gespeicherten Informationen aktualisiert oder ergänzt werden, ggfs. mit einer vorherigen Plausibilitätsprüfung, insbesondere zur Verifikation der Information.

Insbesondere mit Bezug auf die vorgenannten Möglichkeiten kann erfindungsgemäß vorgesehen sein, dass eine Datenbank, die erfindungsgemäß erstellt oder gewartet wird, z.B. zentral, insbesondere in einem Telekommunikationsnetz und/oder dezentral, insbesondere in einem Telekommunikationsgerät, beispielsweise in einem Telekommunikationsendgerät und/oder einem Server, betrieben wird. So bietet sich insbesondere der Betrieb einer solchen Datenbank dezentral in einem Telekommunikationsendgerät oder einem zumindest einem Benutzer zugewiesenen Telekommunikationsgerät oder einem in einem Telekommunikationsnetz befindlichen Server dann an, sofern es sich um persönlich zugeordnete Datenbanken handelt.

Gemäß der Erfindung kann es weiterhin alternativ oder kumulativ auch vorgesehen sein, dass eine Datenbank, die gemäß dem erfindungsgemäßen Verfahren erstellt oder gepflegt wird, insbesondere z.B. eine dezentrale Datenbank mit einer anderen Datenbank, insbesondere einer zentralen abgeglichen wird.

Dies kann beispielsweise auch auf Anforderung eines Telekommunikationsteilnehmers erfolgen, insbesondere desjenigen Telekommunikationsteilnehmers, dem eine zuvor genannte dezentrale Datenbank zugewiesen ist.

So besteht z.B. die Möglichkeit, dass der Benutzer eines Mobiltelefons seine in diesem Mobiltelefon abgelegte Adress- und Termindatenbank dezentraler Art aktualisiert und abgleicht mit den Informationen, die bei einer erfindungsgemäß erstellten Datenbank z.B. innerhalb des Telekommunikationsnetzes entweder für den Benutzer speziell oder aber auch global vorgehalten wird. Hierfür kann es z.B. vorgesehen sein, dass der Telekommunikationsteilnehmer auf seinem Mobiltelefon eine besondere Taste drückt oder beispielsweise auch eine Aktualisierung mittels einer z.B. an seinen Netzprovider gerichteten SMS abfordert.

Gemäß der grundsätzlichen Möglichkeiten des Abgleichs verschiedener Datenbanken untereinander besteht demnach ebenso erfindungsgemäß die Möglichkeit, eine Datenbank eines Telekommunikationsnetzbetreibers abzugleichen mit einer Datenbank eines anderen Telekommunikationsnetzbetreibers. So ist es beispielsweise bekannt, dass verschiedene Telekommunikationsnetzbetreiber, wie beispielsweise Mobilfunkbetreiber, ihre eigenen Datenbanken z.B. mit Informationen über ihre Kunden betreiben. Um diese Informationen netzübergreifend zur Verfügung zu stellen, kann es demnach erfindungsgemäß vorgesehen sein, einen entsprechenden Datenabgleich netzübergreifend durchzuführen.

Das erfindungsgemäße Verfahren zeigt besondere Vorteile auch dahingehend, dass beispielsweise bei einem Telekommunikationsaufbau von einem ersten zu einem zweiten Telekommunikationsteilnehmer automatisch oder aber auch auf Anfrage eine Datenbankabfrage erfolgen kann, ob zu dem zweiten angewählten Telekommunikationsteilnehmer alternative oder ergänzende Erreichbarkeitsinformationen vorliegen.

So braucht sich beispielsweise ein Telekommunikationsteilnehmer, der mit einem zweiten Teilnehmer kommunizieren möchte, nicht darum sorgen, ob ihm die jeweils aktuelle Kommunikationskennung, beispielsweise eine Telefonnummer, vorliegt. Er verwendet letztendlich die in seiner Datenbank üblicherweise gespeicherte, einer Person zugeordnete Telekommunikationskennung, wobei sodann entweder automatisch oder auf besonderen Wunsch z.B. des absendenden Telekommunikationsteilnehmers eine Abfrage in der erfindungsgemäßen Datenbank erfolgt, um zu prüfen, ob zwischenzeitlich eine im Rahmen des erfindungsgemäßen Verfahrens durchgeführte Datenbankaktualisierung vorliegt, so dass dann gegebenenfalls automatisch die angewählte Netzkennung mit der dann aktuellen Netzkennung ersetzt wird.

So kann beispielsweise automatisch eine Weiterleitung von der gewählten Telekommunikationskennung zu einer in der Datenbank gespeicherte Telekommunikationskennung erfolgen. Gemäß der Erfindung kann es vorgesehen sein, dass diese bevorzugte letztgenannte Möglichkeit nur durchgeführt wird, wenn der gewünschte Telekommunikationspartner unter der zunächst angerufenen Telekommunikationskennung nicht erreichbar ist.

Gemäß der Erfindung kann es weiterhin vorgesehen sein, dass in einer Datenbank gespeicherte Informationen an registrierte Benutzer oder Benutzergruppen weitergeleitet werden. Hierfür kann beispielsweise einer Datenbank ein Verteiler zugeordnet werden, welcher besagt, an wen die in der Datenbank gespeicherten Informationen automatisch oder auf Anfrage umverteilt werden. Es kann sich z.B. in einer Anwendung handeln um Versandhäuser oder Behörden, die ein Interesse daran haben, ihre Adress- und gegebenenfalls Kundendaten jeweils auf dem aktuellen Stand zu halten. So kann es beispielsweise vorgesehen sein, dass eine Datenbank, die über das erfindungsgemäße Verfahren betrieben wird, von einem Serviceprovider angeboten wird, bei dem sich interessierte Benutzer oder Benutzergruppen Kontaktdaten abholen können, beispielsweise durch käuflichen Erwerb.

Gemäß einer bevorzugten Ausführung der Erfindung kann es beispielsweise vorgesehen sein, einen zentralen Änderungsdienst netzintern zur Verfügung zu stellen, dem von einem Telekommunikationsteilnehmer eine Nachricht jeglicher Art, z.B. Sprachtext oder Bildnachricht, übermittelt wird, wobei sodann die in der Nachricht gespeicherten personenbezogenen Informationen nach einer Extraktion aus der Nachricht umverteilt wird an interessierte Dritte oder dritte Dienste, wobei es gegebenenfalls vorgesehen sein kann, dass der Absender einer derartigen Nachricht gegebenenfalls auch in der Nachricht oder in einem fest vorgegebenen Verteiler bestimmen kann, an wen die Änderungsinformationen zu übermitteln sind. So kann beispielsweise mittels des erfindungsgemäßen Verfahrens erreicht werden, dass bei einem Umzug einer Person von einer Adresse an eine neue Adresse automatisch die neuen Kontaktdaten umverteilt werden, beispielsweise an sämtliche dritten Parteien, mit denen diese Person in Kontakt steht.

Vorbeschriebenes Verfahren kann bevorzugt auch parallel zu einer aktuellen Telekommunikation stattfinden, wobei die telekommunizierten Daten die Nachrichten im Sinne der Erfindung bilden.

Ein Ausführungsbeispiel der Erfindung ist in der nachfolgenden Figur dargestellt.

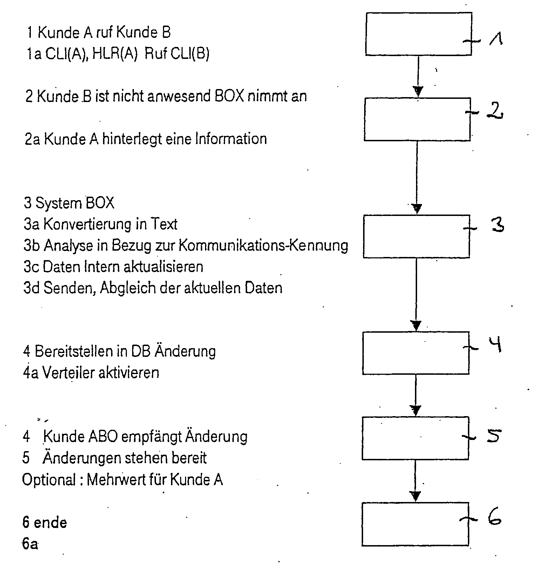

Die Figur 1 zeigt im Wesentlichen ein Ablaufdiagramm, wie das erfindungsgemäße Verfahren durchgeführt werden kann.

In einem Schritt 1 kann es beispielsweise vorgesehen sein, dass ein Kunde A einen Kunden B anruft, wobei sodann automatisch ein Kommunikationsdatensatz beim Aufbau dieser Telekommunikation erzeugt wird, der sowohl die Call Line Identity des Telefonanschlusses des Kunden A bzw. bei Benutzung eines Mobiltelefons das Home Location Register des Kunden A und auch die angerufene Telekommunikationskennung, d.h. die Call Line Identity des Kunden B umfasst. Ist nun beispielsweise der Kunde B nicht anwesend, so kann die Sprachbox, beispielsweise innerhalb des Telekommunikationsnetzes gemäß dem Schritt 2 in dem Abschlussdiagramm die ausgesendete Nachricht entgegennehmen und insbesondere speichern.

Gemäß der Erfindung kann es sodann vorgesehen sein, dass die hinterlegte Nachricht 2, bei der es sich beispielsweise um eine Sprachnachricht handelt, gemäß dem Schritt 3 des Flussdiagramms konvertiert wird in Text, beispielsweise im Rahmen einer Spracherkennung, so dass sodann anschließend die konvertierte Nachricht analysiert werden kann, z.B. in Bezug zu den übermittelten Kommunikationskennungen, um die in der Nachricht aufgefundenen personenbezogenen Informationen einer entsprechenden Person zuzuordnen.

Ist dies erfolgt, so können in der Datenbank die entsprechenden personenbezogenen Informationen aktualisiert oder überhaupt erst erstellt werden, wobei es sodann gemäß Schritt 4 im Flussdiagramm vorgesehen sein kann, dass die in der Datenbank vorgesehenen Änderungen gemäß einem gespeicherten Verteiler umverteilt werden auf andere Datenbanken, in denen dieselbe Person, zu der die personenbezogenen Informationen in Bezug stehen, gespeichert ist. Dies kann derart erfolgen, dass gemäß einem Punkt 5 dritte Abonnementkunden die Änderungen in der Datenbank empfangen und somit für sich nutzbar machen. Die Änderungen stehen somit sodann gemäß Schritt 6 des Flussdiagramms auch in den internen Datenbanken der dritten Parteien zur Verfügung.

Anhand eines Beispiels soll weiterhin belegt werden, wie eine Auswertung und Zuordnung von gesendeten Informationen stattfinden kann. In dem folgenden Beispiel handelt es sich z.B. um eine Sprachnachricht, der vor einer Untersuchung und Auswertung eine Konvertierung, beispielsweise in Text, vorausgeht.

So kann beispielsweise der Anrufer Thomas seinem Freund Georg wie folgt mitteilen, dass er nunmehr eine andere Telefonnummer besitzt: "Hallo Georg, hier ist Thomas, meine neue Rufnummer lautet 12345."

Mit dieser Rufnummer wird sowohl die Call Line Identity des neuen Telekommunikationsanschlusses von Thomas übersendet, der jedoch aufgrund der Tatsache, dass dieser Anschluss neu ist, bislang noch nicht bei Georg in der Datenbank gespeichert ist. Weiterhin wird im Kommunikationsdatensatz auch die Call Line Identity zu Georg übermittelt, bei dem es sich um die angerufene Partei handelt, so dass hier sodann gemäß des erfindungsgemäßen Verfahrens in einer dem Georg zugeordneten Datenbank überprüft werden kann, ob sich in der Datenbank eine Kontaktinformation zu einem Thomas befindet.

Nach einer Informationsauswertung der Nachricht und der dabei extrahierten Namen "Georg" und "Thomas", bei der die Auswertesoftware erkennt, dass es sich bei Georg aufgrund des vorangestellten typischen "Hallo" um die angesprochenen Person handelt, insbesondere in Verbindung mit der Tatsache, dass im Kommunikationsdatensatz die Telekommunikationskennung von Georg ermittelt wird, wird klar, das Thomas die Bezugsperson ist.

Es kann so von einer eindeutigen Zuordnung ausgegangen werden, zumindest dann, wenn nicht mehr als eine Person namens Thomas in der Datenbank von Georg gespeichert ist, so dass sodann zu dieser Person die neuen Kontaktdaten, d.h. hier die neue Rufnummer, in der Datenbank gespeichert werden kann. Die Adressdatenbank von Georg wurde demnach durch die Übermittlung der Nachricht automatisch hinsichtlich der neuen Rufnummer von Thomas aktualisiert.

Aufgrund der Tatsache, dass gemäß dem vorbeschriebenen Teil der Erfindung eine Zuordnung zu einer Person aufgrund vielfältiger Maßnahmen erfolgen kann, wie beispielsweise Überprüfung der Call Line Identity des HLR, der SIM, der IMEI, biometrischer Daten etc. kann somit im Rahmen des erfindungsgemäßen Verfahrens mit hoher Wahrscheinlichkeit festgestellt werden, welcher Person die ermittelte personenbezogene Information in einer Nachricht zugeordnet werden muss.

Sollte sich eine Möglichkeit zu einer Zuordnung nur mit einer nicht ausreichenden Wahrscheinlichkeit ergeben, so kann es gemäß der Erfindung auch vorgesehen sein, dass vor einer Datenübernahme, d.h. einer Aktualisierung in der Datenbank, eine Rückfrage beim Inhaber der Datenbank stattfindet. Diesem können sodann vor der Übernahme die zur Übernahme bestimmten Informationen angeboten bzw. dargestellt werden, wobei dann die entsprechende Person die Plausibilität seinerseits nochmals überprüfen und eine lnformationenübernahme bestätigen oder ablehnen kann

## Patentansprüche

1. Verfahren zum Betrieb, insbesondere zum Erstellen einer Datenbank mit personenbezogenen Informationen, insbesondere einer Adressdatenbank und/oder Termindatenbank, **dadurch gekennzeichnet, dass** der Inhalt einer über ein Telekommunikationsnetz versendeten Nachricht, insbesondere Sprach-, Text-, Bildnachricht, Bewegtbildnachricht oder Nachricht in einer Webseite untersucht wird auf das Vorhandensein personenbezogener Informationen und dass nach dem Auffinden personenbezogener Informationen diese aus einer Nachricht extrahiert, wenigstens einer Person zugeordnet und in der Datenbank gespeichert werden.

2. Verfahren nach Anspruch 1, **dadurch gekennzeichnet, dass** Nachrichten untersucht werden, die innerhalb des Telekommunikationsnetzes, insbesondere temporär, und/oder innerhalb eines empfangenden Telekommunikationsendgerätes gespeichert werden.

3. Verfahren nach einem der vorherigen Ansprüche, **dadurch gekennzeichnet, dass** die Zuordnung der personenbezogenen Informationen zu einer Person erfolgt wenigstens anhand:
• einer Inhaltsanalyse der Nachricht und/oder
• einer Kennung des die Nachricht absendenen/empfangenden Telekommunikationsgerätes (z.B. CLI, HLR, IP-Adresse, IMEI, SIM) und/oder
• einer Kennung der die Nachricht absendenen/empfangenden Person (z.B. ein Passwort, PIN, PAN, SIM, biometrische Daten) und/oder
• Schlüsseldaten, insbesondere Schlüsselwörtern, Schlüsselbilder und/oder
• weiterer Datenbankinformationen dieser oder anderer Datenbanken und/oder
• Linkadressen, Kommunikationsadressen.

4. Verfahren nach einem der vorherigen Ansprüche, **dadurch gekennzeichnet, dass** eine Datenbank wenigstens einem Telekommunikationsteilnehmer und/oder einer Telekommunikationskennung zugeordnet ist, insbesondere einer von diesem bzw. unter der Telekommunikationskennung betriebenen Speichereinheit, insbesondere Mailbox.

5. Verfahren nach einem der vorherigen Ansprüche, **dadurch gekennzeichnet, dass** eine Datenbank zentral, insbesondere in einem Telekommunikationsnetz und/oder dezentral, insbesondere in einem Telekommunikationsendgerät und/oder einem Server betrieben wird.

6. Verfahren nach einem der vorherigen Ansprüche, **dadurch gekennzeichnet, dass** eine Datenbank, insbesondere eine dezentrale mit einer anderen Datenbank, insbesondere einer zentralen, abgeglichen wird, insbesondere auf Anforderung eines Telekommunikationsteilnehmers.

7. Verfahren nach Anspruch 6, **dadurch gekennzeichnet, dass** eine Datenbank eines Telekommunikationsnetzbetreibers abgegleichen wird mit einer Datenbank eines anderen Telekommunikationsnetzbetreibers.

8. Verfahren nach einem der vorherigen Ansprüche, **dadurch gekennzeichnet, dass** bei einem Telekommunikationsaufbau von einem ersten zu einem zweiten Telekommunikationsteilnehmer automatisch oder auf Anfrage eine Datenbankabfrage erfolgt, ob zu dem zweiten angewählten Telekommunikationsteilnehmer alternative oder ergänzende Erreichbarkeitsinformationen vorliegen, insbesondere derart, dass automatisch eine Weiterleitung von einer gewählten Telekommunikationskennung zu einer in der Datenbank gespeicherten Telekommunikationskennung erfolgt.

9. Verfahren nach einem der vorherigen Ansprüche, **dadurch gekennzeichnet, dass** in einer Datenbank gespeicherte Daten an registrierte Benutzer oder Benutzergruppen weitergeleitet werden.

10. Verfahren nach einem der vorherigen Ansprüche, **dadurch gekennzeichnet, dass** es während der Telekommunikation zwischen zwei Teilnehmern durchgeführt wird.
